# EUROPÄISCHE PATENTSCHRIFT

(11) **EP 3 783 581 B1**
(45) Veröffentlichungstag und Bekanntmachung des Hinweises auf die Patenterteilung: **27.07.2022**
(21) Anmeldenummer: 20181739.2
(22) Anmeldetag: 23.06.2020
(51) Int. Cl.: G08B 25/00, G08B 17/10

(54) **VERFAHREN ZUR ZUORDNUNG EINES ZU REGISTRIERENDEN RAUCHMELDERS UND EIN ENTSPRECHENDES RAUCHMELDERVERWALTUNGSSYSTEM**
METHOD FOR ALLOCATING A SMOKE ALARM TO BE REGISTERED AND A CORRESPONDING SMOKE ALARM MANAGEMENT SYSTEM
PROCÉDÉ D'ATTRIBUTION D'UN DÉTECTEUR DE FUMÉE À ENREGISTRER ET SYSTÈME DE GESTION DU DÉTECTEUR DE FUMÉE CORRESPONDANT

(30) Priorität: 21.08.2019 DE 102019122514
(43) Veröffentlichungstag der Anmeldung: 24.02.2021
(73) Patentinhaber: Lupus-Electronics GmbH, 76829 Landau (DE)
(72) Erfinder: Wolff, Matthias, 10439 Berlin (DE)
(74) Vertreter: Angerhausen, Christoph

(56) Entgegenhaltungen:
- WO-A1-2015/054254
- US-A1- 2015 339 634
- US-A1- 2018 324 170
- US-B2- 10 217 348

## Beschreibung

Die Erfindung betrifft ein Verfahren zur Zuordnung eines zu registrierenden Rauchmelders und ein entsprechendes Rauchmelderverwaltungssystem. Ein Verfahren zur Zuordnung eines Haushaltsgeräts zu einem Benutzerprofil mittels einem mobilen Gerät ist beispielsweise aus der US 2015 / 339634 A1 bekannt. Ein weiteres Verfahren zur Zuordnung eines Rauchmelders zu einem Benutzerprofil mittels einem mobilen Gerät ist aus der WO 2015 / 054254 A1 bekannt. Ein Verfahren zur Zuordnung eines Interntet of Things device zu einem Benutzer ist aus der US 2018/0324170 A1 bekannt.

Die Installation von Rauchmeldern ist vielerorts gesetzlich vorgeschrieben. Dabei ist in der Regel eine Wartung und Inspektion von installierten Rauchmeldern alle 12 Monate vorgesehen, um deren Funktionstüchtigkeit im Alarmfall sicherzustellen. Eine herkömmliche Vor-Ort-Inspektion ist allerdings zeit- und kostenintensiv. Wünschenswert ist deshalb eine Fernwartung, z.B. die Überprüfung der Funktionstauglichkeit, beispielsweise durch ein geeignetes Rauchmelderverwaltungssystem, um so die Vor-Ort-Inspektion möglichst nur bei tatsächlichem Ausfall des Rauchmelders durchführen zu müssen bzw. um den Rauchmelder auszutauschen.

Allerdings erfordert dies eine sichere und zuverlässige Registrierung bzw. Zuordnung der Rauchmelder zu den jeweiligen Benutzern bzw. Benutzerprofilen des Rauchmelderverwaltungssystems. Beispielsweise muss vermieden werden, dass der jeweilige Rauchmelder dem falschen Benutzer bzw. Benutzerprofil zugeordnet wird, da andernfalls ein Hinweis auf einen notwendigen Rauchmelderaustausch nicht richtig zugestellt werden kann oder ein Rauchmelder nicht als defekt erkannt werden kann.

Ein Verfahren zur Verknüpfung eines Rauchmelders mit einem Benutzer eines Rauchmelderverwaltungssystem ist aus der DE 10 2014 014 106 A1 bekannt. Demnach wird der Rauchmelder dem Benutzer dadurch zugeordnet, dass der Benutzer über an dem Rauchmelder angebrachte Bedienelemente mehrere Bestätigungsdaten in einem von dem Rauchmelderverwaltungssystem vorgegebenen zeitlichen Abstand an das Rauchmelderverwaltungssystem sendet; die Zuordnung erfolgt also dadurch, dass der Benutzer mehrmals im richtigen Moment ein Bedienelement, z.B. einen Taster, des Rauchmelders betätigt.

Damit können sich Probleme bei gleichzeitiger Registrierung mehrerer Rauchmelder durch mehrere Benutzer ergeben, falls bspw. einer der Benutzer unbeabsichtigt die eigentlich einem anderen Benutzer oder Rauchmelder zugeordnete zeitliche Abfolge betätigt. Zudem ist eine erfolgreiche Zuordnung des Rauchmelders von dem "Taktgefühl" des Benutzers abhängig, so dass sich mehrere Fehlversuche ergeben können.

Es ist deshalb Aufgabe der vorliegenden Erfindung, ein Verfahren zur Zuordnung eines zu registrierenden Rauchmelders zu einem Benutzerprofil eines Rauchmelderverwaltungssystems bereitzustellen, das eine sichere, zuverlässige und einfache Zuordnung verwirklicht. Diese Aufgabe wird durch das Verfahren nach Anspruch 1 gelöst. Anspruch 10 offenbart ein entsprechendes Rauchmelderverwaltungssystem. Vorteilhafte Ausführungsformen sind Gegenstand der Unteransprüche.

Demgemäß wird ein Verfahren zur Zuordnung eines zu registrierenden Rauchmelders zu einem Benutzerprofil eines Rauchmelderverwaltungssystems. Das Verfahren weist dabei die folgenden Schritte auf:
- Herstellen einer Datenverbindung zwischen dem Rauchmelder und einem Server des Rauchmelderverwaltungssystems, wobei der Rauchmelder direkt mit dem Server über Narrowband-Internet of Things verbunden wird, und Übertragen von ersten Identifikationsdaten des zu registrierenden Rauchmelders an den Server über die Datenverbindung zwischen Rauchmelder und Server, wobei die ersten Identifikationsdaten einen dem Rauchmelder eindeutig zugeordneten alphanumerischen Code aufweisen;
- Herstellen einer Datenverbindung zwischen einem mobilen Gerät und dem Server;
- Einloggen in das Benutzerprofil mittels des mobilen Geräts unter Verwendung von dem Benutzerprofil eindeutig zugeordneten Benutzeridentifikationsdaten;
- Übertragen von zweiten Identifikationsdaten des zu registrierenden Rauchmelders von dem zu registrierenden Rauchmelder an das mobile Gerät;
- Übertragen der zweiten Identifikationsdaten an den Server durch das mobile Gerät, oder Übertragen der zweiten Identifikationsdaten und der Benutzeridentifikationsdaten an den Server durch das mobile Gerät; und
- Identifizieren des Rauchmelders mittels der ersten und zweiten Identifikationsdaten und Zuordnen des Rauchmelders zu dem eingeloggten Benutzerprofil oder dem den Benutzeridentifikationsdaten entsprechenden Benutzerprofil.

Das erfindungsgemäße Verfahren zeichnet sich insbesondere dadurch aus, dass ein Einloggen in das Benutzerprofil mittels des mobilen Geräts unter Verwendung der Benutzeridentifikationsdaten erfolgt und zweite Identifikationsdaten von dem Rauchmelder an das mobile Gerät übertragen werden. Nach Übertragung der zweiten Identifikationsdaten durch das mobile Gerät an den Server kann der Server somit eindeutig den Rauchmelder dem eingeloggten Benutzerprofil zuordnen. Der Server kann mindestens eine Kommunikationsschnittstelle zum Datenaustausch mit dem mindestens einem Rauchmelder und dem mindestens einen mobilen Gerät aufweisen. Der Rauchmelder und das mobile Gerät können geeignete Kommunikationsschnittstellen zum gegenseitigen Datenaustausch und/oder zum Datenaustausch mit dem Server aufweisen. Das Rauchmelderverwaltungssystem und/oder der Server des Rauchmelderverwaltungssystems kann/können bevorzugt cloud-basiert sein. Damit kann sich eine besonders vorteilhafte Skalierbarkeit des Rauchmelderverwaltungssystems ergeben.

Nach dem Identifizieren des Rauchmelders und dem Zuordnen des Rauchmelders zu dem Benutzerprofil können dem dem Benutzerprofil zugeordneten Rauchmelder Positions- und/oder Adressdaten zugeordnet werden. Zur Erfassung von Positionsdaten kann der Rauchmelder beispielsweise ein GNSS-Modul aufweisen. Als Adressdaten kann beispielsweise dem Rauchmelder ein Land, eine Stadt, eine Straßenadresse, eine Gebäudenummer, eine Etagennummer, eine Raumnummer oder dergleichen und/oder eine beliebige Kombination dieser zugeordnet werden. Die Positions- und/oder Adressdaten können serverseitig hinterlegt werden. Es kann aber auch vorgesehen sein, dass der Rauchmelder einen Datenspeicher zur Hinterlegung der jeweiligen Daten aufweist. Sind dem Rauchmelder Positions- und/oder Adressdaten zugeordnet, so können diese über das Benutzerprofil zugänglich und/oder änderbar sein. Es kann vorgesehen sein, dass nach dem Zuordnen des Rauchmelders zu einem Benutzerprofil die jeweiligen Positions- und/oder Adressdaten auf dem Server und/oder dem Rauchmelder hinterlegt werden und anschließend dem Rauchmelder zugeordnet werden. Es kann aber auch vorgesehen sein, dass die die jeweiligen Positions- und/oder Adressdaten bereits vor dem Identifizieren des Rauchmelders auf dem Server und/oder dem Rauchmelder hinterlegt werden und nach dem Identifizieren des Rauchmelders dem Rauchmelder zugeordnet werden. Es kann vorgesehen sein, dass das Hinterlegen der Positions- und/oder Adressdaten für mehrere Rauchmelder nicht nacheinander, sondern im Wesentlichen parallel erfolgt, beispielsweise durch ein geeignetes hierarchisches Datenformat oder eine Liste. Insbesondere wenn mehrere Rauchmelder einem Benutzerprofil zugeordnet werden sollen, kann sich damit eine flexible und bequeme Zuordnung der Positions- und/oder Adressdaten ergeben, da die Rauchmelder nur noch mit den bereits hinterlegten Daten verknüpft werden müssen und das separate Hinterlegen von einzelnen Datensätzen für jeden individuellen Rauchmelder entfallen kann. Ebenso kann die Installation mehrerer Rauchmelder insofern erleichtert werden, da deren Installationsposition und/oder Adresse vor deren Anbringung bereits festgelegt ist. Die Zuordnung von Adressdaten zu den Rauchmeldern ist insbesondere vorteilhaft, da damit die Rauchmelder besonders komfortabel in sinnvolle Gruppen eingeteilt werden können. Beispielsweise können mehrere Rauchmelder derselben Straßenadresse und demselben Gebäude zugeordnet sein, sich aber in der Raumnummer unterscheiden.

Es kann vorgesehen sein, einige der Schritte des Verfahrens in unterschiedlicher Reihenfolge durchzuführen. Beispielsweise können zuerst die zweiten Identifikationsdaten des zu registrierenden Rauchmelders an das mobile Gerät übertragen werden und/oder die zweiten Identifikationsdaten und/oder die Benutzeridentifikationsdaten an den Server des Rauchmelderverwaltungssystems durch das mobile Gerät übertragen werden, bevor die ersten Identifikationsdaten des Rauchmelders an den Server des Rauchmelderverwaltungssystems übertragen werden.

Der Rauchmelder kann Rauch mittels Konzentrationsmessung geeigneter Rauchbestandteile oder Verbrennungsgase, beispielsweise Kohlenstoffmonoxid, durch Temperaturmessung und/oder optisch detektieren und einen Alarm auslösen. Der Rauchmelder kann zur Auslösung des Alarms einen akustischen Signalgeber, z.B. eine Sirene oder einen Lautsprecher, aufweisen. Es ist aber auch vorstellbar, dass der Alarm zusätzlich oder stattdessen optisch, z.B. durch LEDs, ausgelöst werden kann. Der Rauchmelder kann ein GNSS-Modul zur Orts- oder Positionsbestimmung bzw. zur Ermittlung von Positionsdaten aufweisen.. Der Rauchmelder kann weitere Sensoren zur Umfeldüberwachung, z.B. einen oder mehrere Ultraschallsensoren und/oder Sensoren zur Überwachung einer Raucheintrittskammer des Rauchmelders, z.B. eine oder mehrere Infrarotdioden und/oder Infrarotsensoren, aufweisen. Verfügt der Rauchmelder über derartige Sensoren, so können beispielsweise Objekte in der Nähe des Rauchmelders oder eine Verschmutzung der Rauchkammer durch beispielsweise Staub erfasst werden. Damit können Beeinträchtigungen der Messgenauigkeit des Rauchmelders bis hin zu einem Ausfall frühzeitig erkannt werden. Der Rauchmelder kann einen Sabotagekontakt aufweisen, um z.B. ein Lösen aus einer Montagehalterung des Rauchmelders zu erfassen.

Bevorzugt ist das Rauchmelderverwaltungssystem und/oder der Server cloud-basiert. Damit kann eine gute Skalierbarkeit erzielt werden. Das mobile Gerät kann ein Smartphone, ein Laptop, ein PDA oder ein Tablet sein. Die Benutzeridentifikationsdaten können einen Benutzernamen, eine Pin, einen alphanumerischen Code, eine E-Mail-Adresse, einen elektronischen Fingerabdruck oder Fingerprint, eine elektronische Signatur und/oder ein Foto umfassen. Die ersten und/oder zweiten Identifikationsdaten des Rauchmelders weisen einen eindeutig zugeordneten alphanumerischen Code auf. Zusätzlich können die ersten und/oder zweiten Identifikationsdaten Informationen bezüglich des Rauchmeldertyps oder Herstellers, Orts-, Adress- oder Positionsdaten des Rauchmelders aufweisen.

Das Herstellen einer Verbindung des zu registrierenden Rauchmelders mit dem Server des Rauchmelderverwaltungssystems und übertragen der ersten Identifikationsdaten kann beispielsweise durch Drücken eines an dem Rauchmelder angebrachten Tasters erfolgen. Es kann aber auch vorgesehen sein, dass das Übertragen der ersten Identifikationsdaten von dem Rauchmelder an den Server durch den Rauchmelder selbstständig nach dem Herstellen einer Verbindung zu dem Server erfolgt.

Das Einloggen kann über ein auf dem mobilen Gerät vorgehaltenes Computerprogramm, eine App oder ein GUI erfolgen. Nach erfolgtem Einloggen kann beispielsweise ein Benutzer dem Server mitteilen, dass ein Rauchmelder zu dem eingeloggten Benutzerprofil hinzugefügt werden soll. Wird ein Computerprogramm, eine App oder ein GUI zum Einloggen verwendet, so können die zweiten Identifikationsdaten von dem Computerprogramm, der App oder dem GUI an den Server übermittelt werden. In einer Ausrührungsform kann das Übertragen der ersten Identifikationsdaten an den Server nach dem Herstellen einer Verbindung zwischen Rauchmelder und mobilem Gerät erfolgen. Es kann vorgesehen sein, dass in diesem Falle das Übertragen der ersten Identifikationsdaten durch das Computerprogramm, App oder GUI erfolgt, d.h. das Übertragen der ersten Identifikationsdaten durch das mobile Gerät initiiert wird, beispielsweise durch Übertragen einer entsprechenden Anweisung an den Rauchmelder oder den Server.

Es kann vorgesehen sein, dass die ersten und die zweiten Identifikationsdaten identisch sind.

Damit kann das Zuordnen des Rauchmelders zu dem eingeloggten Benutzerprofil erleichtert werden, da ein Abgleich der ersten und der zweiten Identifikationsdaten oder eine Überprüfung auf gegenseitiges Entsprechen entfallen kann.

Das mobile Gerät kann mindestens während des Übertragens der jeweiligen Daten mit dem Server drahtlos, bevorzugt über ein Mobilfunknetz, besonders bevorzugt über Narrowband-Internet of Things (Narrowband IoT), verbunden sein. Der Rauchmelder kann ein geeignetes Modul, beispielsweise eine SIM-Karte, aufweisen. Es kann vorgesehen sein, dass sowohl der Rauchmelder als auch das mobile Gerät auf gleiche Art, z.B. beide über Narrowband-Internet of Things (Narrowband IoT), mit dem Server verbunden sind. Damit kann sichergestellt werden, dass zur Registrierung des Rauchmelders nur das gewählte Netz verfügbar sein muss, während bei unterschiedlichen Verbindungsarten zwei Netze verfügbar sein müssen.

Da der Rauchmelder direkt mit dem Server verbunden ist, wird insbesondere kein weiteres Gateway benötigt. Es kann sichergestellt werden, dass sich der Montageplatz des Rauchmelders nicht im Empfangs- und Sendebereich eines weiteren Gateways befinden muss. Dadurch kann die Montage und die Zuordnung des zu registrierenden Rauchmelders erleichtert werden.. Ist der Rauchmelder bspw. über Narrowband-Internet of Things (Narrowband IoT) und das mobile Gerät über ein GSM-Netz mit dem Server verbunden, kann die Registrierung des Rauchmelders mittels des mobilen Geräts über das GSM-Netz erfolgen. Nach der Registrierung kann der Rauchmelder über Narrowband-Internet of Things (Narrowband IoT) mit dem Server kommunizieren und bspw. Messdaten übermitteln oder gewartet werden.

Das Übertragen der zweiten Identifikationsdaten an das mobile Gerät kann entweder
- das Erfassen eines auf dem Rauchmelder angebrachten QR-codes mit dem mobilen Gerät oder
- das Erfassen eines auf dem Rauchmelder angebrachten oder dem Rauchmelder beigelegten Piktogramms oder alphanumerischen Codes mit dem mobilen Gerät und das Anwenden einer Bilderkennungssoftware aufweisen oder
- über eine drahtlose Verbindung zwischen Rauchmelder und mobilem Gerät erfolgen.

Wird ein Computerprogramm, eine App oder ein GUI zum Einloggen verwendet, so kann das Computerprogramm, die App oder das GUI nach erfolgtem Einloggen und/oder Mitteilen einer Registrierungsabsicht an den Server bspw. den Benutzer auffordern, einen auf dem Rauchmelder angebrachten QR-Code zu scannen oder einen alphanumerischen Code einzutippen. Es kann auch vorgesehen sein, dass das mobile Gerät den Rauchmelder automatisch erkennt, sofern sich dieser in ausreichender Nähe befindet. Der Rauchmelder und/oder das mobile Gerät können derart eingerichtet sein, dass eine automatische Übertragung der zweiten Identifikationsdaten erfolgt. Es kann vorgesehen sein, dass der Benutzer die von dem mobilen Gerät erfassten zweiten Identifikationsdaten bestätigen muss.

Vor dem Zuordnen des Rauchmelders kann von dem Server eine Autorisierungsanfrage an das mobile Gerät gesendet werden. Wird ein Computerprogramm, eine App oder ein GUI zum Einloggen verwendet, so kann diese Autorisierungsanfrage dem Benutzer durch das Computerprogramm, die App oder das GUI mitgeteilt werden. Es kann vorgesehen sein, dass die Registrierung bzw. Zuordnung des Rauchmelders zu dem Benutzerprofil nur dann erfolgt oder abgeschlossen werden kann, wenn der Benutzer die Autorisierungsanfrage bestätigt.

Nach dem Zuordnen des Rauchmelders zu einem Benutzerprofil kann der Rauchmelder mindestens einem weiteren Benutzerprofil zugeordnet werden, wobei diese weitere Zuordnung entweder analog zu dem oben beschriebenen Verfahren oder über eine Änderung der auf dem Server hinterlegten Zuordnungsdaten erfolgt.

Soll eine Änderung der auf dem Server des Rauchmelderverwaltungssystems hinterlegten Zuordnungsdaten erfolgen, so kann z.B. vorgesehen sein, dass der Benutzer, dessen Benutzerprofil der Rauchmelder zugeordnet worden ist, sich einloggt und beispielsweise über das Computerprogramm, die App oder das GUI den ihm zugeordneten Rauchmelder einen weiteren Benutzerprofil zuordnet oder diesen einem weiteren Benutzerprofil freigibt. Es kann vorgesehen sein, nach der Zuordnung zu einem Benutzerprofil den zugeordneten Rauchmelder einer Rauchmeldergruppe und/oder Rauchmelderuntergruppe zuzuordnen. Nach der Zuordnung zu einer Rauchmeldergruppe und/oder Rauchmelderuntergruppe kann vorgesehen sein, anderen Benutzerprofilen einen zumindest teilweisen Zugriff auf die von dem Rauchmelder an den Server übermittelten Daten zu erlauben. Es kann auch vorgesehen sein, nach der Zuordnung zu einem Benutzerprofil die Betriebsparameter und/oder Einstellungen zugeordneten Rauchmelders über das mobile Gerät zu ändern.

Der Rauchmelder kann nach der Zuordnung periodisch Zustandsdaten und/oder Betriebsdaten und/oder die ersten Identifikationsdaten und/oder die zweiten Identifikationsdaten an den Server übermitteln. Die Zustandsdaten können z.B. Statusmeldungen des Rauchmelders umfassen, beispielsweise ob dieser aktiv ist oder ein Alarmfall vorliegt, welche Firmware aufgespielt ist oder einen Sensorzustand oder ggf. Batteriezustand beinhalten. Befindet sich beispielsweise ein Objekt in der Nähe des Rauchmelders oder wird ein solches in der Nähe platziert, so kann der Rauchmelder dies über einen etwaigen Umfeldsensor erfassen und an den Server kommunizieren. Die Auswertung der Zustandsdaten kann server- und/oder rauchmelderseitig erfolgen. Erfolgt die Auswertung rauchmelderseitig, so weist der Rauchmelder eine dazu geeignete Auswerteeinheit, beispielsweise einen Mikrocontroller oder dergleichen, auf. Die Betriebsdaten können bspw. Messdaten, die von den Sensoren des Rauchmelders gemessen werden, umfassen. Die Betriebsdaten können z.B. Temperaturdaten oder Messwerte der Konzentration geeigneter Rauchindikatoren umfassen. Die an den Server übermittelten Daten können derart auf dem Server hinterlegt werden, dass diese dem dem Rauchmelder zugeordneten Benutzerprofil zugänglich sind. Es kann vorgesehen sein, dass auf die übermittelten Daten mittels des mobilen Geräts, bevorzugt mittels des Computerprogramms, der App oder dem GUI zugegriffen werden kann. Bevorzugt werden mindestens einmal alle 24 Stunden, besonders bevorzugt mindestens einmal alle 12 Stunden, die jeweiligen Daten von dem Rauchmelder an den Server übermittelt. Insbesondere kann vorgesehen sein, dass der Rauchmelder im Alarmfall nicht bis zum nächsten periodischen Übermittlungszeitpunkt wartet, sondern sofort die jeweiligen Daten an den Server übermittelt.

Nach dem Zuordnen kann der Rauchmelder einmalig oder periodisch Betriebsparameter, Einstellungen und/oder Firmware mit dem Server abgleichen und/oder mit diesem synchronisieren. Betriebsparameter können bspw. die periodischen Übermittlungsintervalle umfassen. Einstellungen können bspw. zur Erkennung des Alarmfalls notwendige Schwellwerte umfassen. Mit dem Begriff "abgleichen" kann gemeint sein, dass der Rauchmelder die in ihm hinterlegten Betriebsparameter, Einstellungen und/oder Firmware und/oder Version der Firmware mit denjenigen auf dem Server hinterlegten vergleicht. Mit dem Begriff "synchronisieren" kann gemeint sein, dass der Rauchmelder bei Feststellen einer Differenz während oder nach dem Abgleichen die unterschiedlichen Werte oder Programme von dem Server herunterlädt und/oder aktualisiert. Es kann vorgesehen sein, dass der Rauchmelder selbstständig den Abgleich und/oder das Synchronisieren durchführt, d h. entsprechende Anfragen an den Server stellt. Es kann aber auch vorgesehen sein, dass der Server die jeweiligen Informationen von dem Rauchmelder abfragt, auf Unterschiede prüft und dies ggf. dem Rauchmelder kommuniziert und/oder das Herunterladen auf den Rauchmelder initiiert. Bevorzugt erfolgt ein Abgleich und ggf. eine Synchronisation mindestens einmal alle 24 Stunden, besonders bevorzugt mindestens einmal alle 12 Stunden. Es kann auch vorgesehen sein, dass der Abgleich und/oder das Synchronisieren durch den Benutzer nach einloggen in das Benutzerprofil initiiert wird.

Die Erfindung betrifft weiterhin ein Rauchmelderverwaltungssystem, aufweisend mindestens einen Rauchmelder und mindestens einen Server, wobei auf dem Server mindestens ein Benutzerprofil hinterlegt ist, wobei der Server mit dem mindestens einen Rauchmelder zum Datenaustausch verbunden ist, wobei der Server bevorzugt cloud-basiert ist, wobei der Server dazu eingerichtet ist, von dem Rauchmelder empfangene Daten abzulegen und einem dem Rauchmelder zugeordneten Benutzerprofil zugänglich zu machen, wobei der Server eine Kommunikationsschnittstelle aufweist, die dazu eingerichtet ist, eine direkte Datenverbindung über Narrowband-Internet of Things mit einem zu registrierenden Rauchmelder und eine Datenverbindung mit einem mobilen Gerät herzustellen, wobei der Server dazu eingerichtet ist, erste Identifikationsdaten, die einen den zu registrierenden Rauchmelder eindeutig zugeordneten alphanumerischen Code aufweisen, von dem zu registrierenden Rauchmelder über die Kommunikationsschnittstelle zu empfangen, und wobei der Server dazu eingerichtet ist, zweite Identifikationsdaten von dem mobilen Gerät über die Kommunikationsschnittstelle zu empfangen, so dass der zu registrierender Rauchmelder mittels von dem mobilen Gerät empfangenen zweiten Identifikationsdaten und von dem zu registrierenden Rauchmelder empfangenen ersten Identifikationsdaten dem Benutzerprofil zuordbar ist, wobei der Rauchmelder dem Benutzerprofil durch das beschriebene erfindungsgemäße Verfahren zugeordnet ist.

Das mobile Gerät kann mit dem Server drahtlos, bevorzugt über ein Mobilfunknetz und besonders bevorzugt über Narrowband-Internet of Things (Narrowband-IoT) verbunden sein. Es kann auf ein weiteres Gateway zwischen Rauchmelder und Server verzichtet werden.

Der Server kann mit mindestens einem Computergerät zum Datenaustausch verbunden sein, wobei das Computergerät dazu eingerichtet sein kann, unter Verwendung von das Benutzerprofil eindeutig identifizierenden Benutzeridentifikationsdaten die von dem entsprechenden Rauchmelder empfangenen und auf dem Server hinterlegten Daten herunterzuladen, zu manipulieren oder dem Benutzerprofil neue Daten hinzuzufügen oder auf die Daten zuzugreifen. Das Computergerät kann ein mobiles Gerät, beispielsweise ein Laptop, Smartphone, PDA oder Tablet sein. Das Computergerät kann ein weiterer Server, ein Desktop-PC, eine Workstation, ein Mikrocontroller, ein integrierter Schaltkreis, ein FPGA oder dergleichen sein oder aufweisen. Es kann vorgesehen sein, dass das Computergerät dazu ein Computerprogramm, eine App oder ein GUI aufweist. Insbesondere kann vorgesehen sein, dass ein Benutzer damit die in seinem Benutzerprofil hinterlegten Einstellungen und Betriebsparameter jedes dem Benutzerprofil zugeordneten Rauchmelders ändern oder löschen kann, aber auch neu hinzufügen kann. Es kann weiterhin vorgesehen sein, dass das Computerprogramm, die App oder das GUI die von jedem dem Benutzerprofil zugeordneten Rauchmelder auf dem Server hinterlegten Daten graphisch aufbereiten und anzeigen kann. Mindestens eines oder alle Computergeräte können über das Internet mit dem Server verbunden sein. In einer Ausführungsform kann mindestens ein Computergerät kabelgebunden mit dem Server verbunden sein.

Auf dem Server kann eine Mehrzahl Benutzerprofile hinterlegt sein, wobei mindestens eines, bevorzugt jedes der Benutzerprofile mindestens einer von mindestens zwei Benutzerprofilgruppen zugeordnet sein kann, wobei jedem derselben Benutzerprofilgruppe zugeordneten Benutzerprofil derselbe der mindestens einen Rauchmelder zugeordnet sein kann. Insbesondere kann damit ein Rauchmelder mehreren Benutzerprofilen und/oder Benutzerprofilgruppen zugeordnet sein. In anderen Worten können die der Benutzerprofilgruppe zugeordneten Benutzerprofile auf denselben mindestens einen Rauchmelder zugreifen. Benutzerprofile, die nicht der Benutzerprofilgruppe zugeordnet sind, können nicht auf die den Benutzerprofilen der Benutzerprofilgruppen gemeinsam zugeordneten Rauchmelder zugreifen. In den meisten Fällen sind einer Benutzerprofilgruppe mehrere Benutzerprofile und mehrere Rauchmelder zugeordnet, so dass sich die Benutzerprofile der Benutzerprofilgruppe z.B. den Zugriff auf dieselben Rauchmelder teilen können. Es kann aber auch vorgesehen sein, dass eine Benutzerprofilgruppe lediglich ein Benutzerprofil mit einem dem Benutzerprofil zugeordneten Rauchmelder umfasst. Ein Benutzerprofil kann mehreren Benutzerprofilgruppen zugeordnet sein. Wird ein einer Benutzerprofilgruppe zugeordnetes Benutzerprofil einer weiteren Benutzerprofilgruppe zugeordnet, so kann vorgesehen sein, dem Benutzerprof die den Benutzerprofilen der weiteren Benutzerprofilgruppe zugeordneten Rauchmelder zuzuordnen. Vorteilhafterweise können die Benutzerprofilgruppen anhand der Adressdaten der Rauchmelder eingeteilt werden. Sind den Rauchmeldern Straßenadressen und Gebäudenummern als Adressdaten zugeordnet, so können einer Benutzerprofilgruppe z.B. diejenigen Rauchmelder mit gleicher Straßenadresse und /oder gleicher Gebäudenummer zugeordnet sein. Wird ein Rauchmelder einem Benutzerprofil einer Benutzerprofilgruppe zugeordnet, so kann vorgesehen sein, dass dieser Rauchmelder auch automatisch allen anderen Benutzerprofilen der Benutzerprofilgruppe zugeordnet wird. Es kann aber auch vorgesehen sein, dass der Benutzer und/oder ein Administrator den ihm zugeordneten Rauchmelder nur ausgesuchten Benutzerprofilen weiter zuordnet, wodurch sich eine weitere Benutzergruppe bestehend aus dem Benutzerprofil bzw. Administrator und den ausgesuchten Benutzerprofilen ergibt.

Mindestens eines der einer Benutzerprofilgruppe zugeordneten Benutzerprofile kann Administratorrechte mindestens bezüglich der jeweiligen Benutzerprofilgruppe haben. Es kann vorgesehen sein, dass nur der Administrator Benutzerprofile zu einer Benutzerprofilgruppe hinzufügen oder entfernen kann. Es kann vorgesehen sein, dass nur der Administrator die jeweiligen Einstellungen und Betriebsparameter der den Benutzerprofilen der Benutzerprofilgruppe zugeordneten Rauchmelder manipulieren kann oder derartige Rechte an bestimmte Benutzerprofile der Benutzerprofilgruppe vergibt oder einschränkt. Es kann vorgesehen sein, dass der Administrator den Zugriff der der Benutzerprofilgruppe zugeordneten Benutzerprofile auf die Rauchmelder bzw. die von den Rauchmeldern empfangenen Daten je nach Benutzer und Datensatz einschränken oder erlauben kann.

Es können weitere Hierarchiestufen mit unterschiedlichen Berechtigungen und Zugriffsrechten für jede Benutzerprofilgruppe vorgesehen sein. Die Anzahl der Hierarchiestufen kann dabei prinzipiell unbegrenzt sein. Es kann vorgesehen sein, dass die Einteilung bzw. Beförderung oder Degradierung der jeweiligen Benutzerprofile zu einer bestimmten Hierarchiestufen nur durch einer höheren Hierarchiestufe zugeordneten Benutzerprofile erfolgen kann. Es können weiterhin Super-Administratoren bzw. Systemadministratoren vorgesehen sein, die Administratorrechte bezüglich mehrerer oder sogar sämtlicher auf dem Server hinterlegten Benutzerprofilgruppen haben.

Das Rauchmelderverwaltungssystem kann eine Auswerteeinheit aufweisen, die aus den von dem Rauchmelder übertragenen Daten einen Alarmfall und/oder einen Wartungsfall identifizieren kann, wobei im Alarmfall der Server eine Alarmnachricht und/oder im Wartungsfall eine Wartungsnachricht an die dem Rauchmelder zugeordneten Benutzerprofile senden kann. Die Alarmnachricht kann auch von dem Rauchmelder an den Server und von dem Server an die dem Rauchmelder zugeordneten Benutzerprofile gesendet werden. Es kann auch vorgesehen sein, dass die Alarmnachricht nur an den Administrator der dem Rauchmelder zugeordneten jeweiligen Benutzerprofilgruppe oder von dem Administrator bestimmte Benutzerprofile gesendet wird. Wird die Alarmnachricht an ein Benutzerprofil gesendet, so kann insbesondere vorgesehen sein, dass die Alarmnachricht auch an mit dem Benutzerprofil verbundene Computergerätegesendet wird. Mit "Alarmfall" kann bevorzugt ein Brandfall und/oder ein Erfassen von Rauch gemeint sein. Bevorzugt kann ein Alarmfall bei Überschreiten eines Schwellwerts einer Temperatur oder einer gemessenen Konzentration eines geeigneten Rauchbestandsteils identifiziert werden. In einer Ausführungsforme kann der Begriff "Alarmfall" aber auch das Auslösen eines Sabotagesensors, z.B. bei unautorisierter Entfernung des Rauchmelders aus seiner Halterung, umfassen. Es kann vorgesehen sein, dass ein Alarmfall bei der Erfassung eines Objekts in der Nähe des Rauchmelders, z.B. durch einen Ultraschallsensor des Rauchmelders, oder bei Überschreitung eines entsprechenden Schwellwerts vorliegt. Es kann aber auch vorgesehen sein, dass ein Alarmfall bei Erfassung einer Blockierung oder Verschmutzung der Raucheintrittskammer des Rauchmelders, beispielsweise durch Staubablagerungen, oder einer Überschreitung eines entsprechenden Schwellwerts eintritt. Bevorzugt ist die Alarmnachricht auf den Alarmfall abgestimmt. Sind beispielsweise Adressdaten hinterlegt, so kann die Alarmnachricht diese enthalten. Es kann vorgesehen sein, dass die Alarmnachricht die von dem entsprechenden Rauchmelder übermittelten Daten zumindest teilweise enthält oder diese in geeigneter Weise kommuniziert.

Die Auswerteeinheit kann den Zustand jedes Rauchmelders bspw. anhand der von dem Rauchmelder übermittelten Zustandsdaten auswerten und feststellen, ob bzw. in welchem Umfang der jeweilige Rauchmelder gewartet oder ausgetauscht werden muss. Alternativ oder zusätzlich kann das Rauchmelderverwaltungssystem für diesen Zweck auch eine separate Wartungs-Auswerteeinheit aufweisen. Wird festgestellt, dass der Rauchmelder gewartet oder ausgetauscht werden muss, so kann eine Wartungsnachricht an das dem Rauchmelder zugeordneten Benutzerprofil und/oder an den Administrator oder von diesem bestimmte Benutzerprofile der zugeordneten Benutzerprofilgruppe kommuniziert werden. Es kann insbesondere vorgesehen sein, die Wartungsnachricht auch an mit dem Benutzerprofil verbundene Computergeräte zu kommunizieren. Beispielsweise kann ein Wartungsfall einen Batteriewechsel, einen Ausfall eines oder mehrerer Sensoren des Rauchmelders, einen Austausch des Rauchmelders und/oder einen Verbindungsabbruch zwischen Rauchmelder und Server über einen gewissen Zeitraum umfassen. Bevorzugt ist die Wartungsnachricht auf den Wartungsfall abgestimmt. Sind beispielsweise Adressdaten hinterlegt, so kann die Wartungsnachricht diese enthalten. Es kann vorgesehen sein, dass die Wartungsnachricht die von dem entsprechenden Rauchmelder übermittelten Daten zumindest teilweise enthält oder diese in geeigneter Weise kommuniziert. Es kann weiterhin vorgesehen sein, dass die Auswerteeinheit und/oder ggf. die Wartungs-Auswerteeinheit mit dem hinterlegten Zustandsdaten eine Vorhersage bezüglich eines Wartungs- oder Austauschzeitpunkts trifft. Die Prognose kann dem dem Rauchmelder zugeordneten Benutzerprofil und/oder dem Administrator oder von diesem freigeschalteten Benutzerprofile der zugeordneten Benutzerprofilgruppe kommuniziert werden. Bevorzugt kann die Wartungs-Auswerteeinheit mit der Auswerteeinheit identisch sein. Es kann insbesondere vorgesehen sein, die Prognose auch an mit dem Benutzerprofil verbundene Computergeräte zu kommunizieren.

Die Auswerteeinheit und/oder Wartungs-Auswerteeinheit kann als Software ausgeführt sein und/oder kann dem Server des Rauchmelderverwaltungssystems entsprechen bzw. auf diesem laufen. Es kann aber auch vorgesehen sein, dass die Auswerteeinheit und/oder Wartungs-Auswerteeinheit einem weiteren mit dem Server verbundenen Computergerät entspricht oder auf diesem läuft. Es ist auch vorstellbar, dass die Auswerteeinheit und/oder Wartungs-Auswerteeinheit dem Computergerätentspricht bzw. auf diesem läuft, d.h. die Auswertung nicht auf dem Server sondern lokal von den mit dem Server verbundenen Geräten des Benutzers durchgeführt wird.

Weitere Einzelheiten der Erfindung werden anhand der nachstehenden Figuren erläutert. Dabei zeigt:
- Figur 1: eine schematische Darstellung einer Ausführungsform eines erfindungsgemäßen Verfahrens zur Zuordnung eines zu registrierenden Rauchmelders;
- Figur 2: eine schematische Darstellung einer Ausführungsform eines erfindungsgemäßen Rauchmelderverwaltungssystems;
- Figur 3: eine Ansicht eines GUI, die ein Benutzerprofil zeigt;
- Figur 4: eine Ansicht eines GUI, die eine Rechteverteilung verschiedener einer Benutzerprofilgruppe zugeordneter Benutzerprofile zeigt;
- Figur 5: eine Ansicht eines GUI, die eine Übersicht einem Benutzerprofil zugeordneter Rauchmelder zeigt;
- Figur 6: eine Ansicht eines GUI, die an ein Benutzerprofil kommunizierte Nachrichten, insbesondere eine Alarmnachricht im Alarmfall, zeigt.

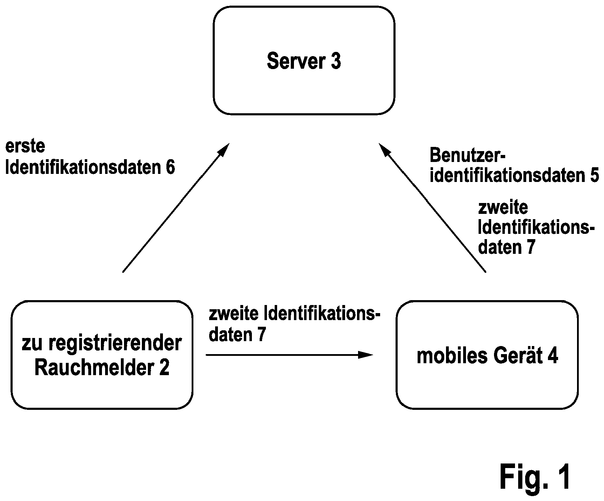

Figur 1 zeigt schematisch eine Ausführungsform eines erfindungsgemäßen Verfahrens zur Registrierung eines Rauchmelders 2. Der zu registrierende Rauchmelder 2 ist dabei mit dem Server 3 des Rauchmelderverwaltungssystems 1 derart verbunden, dass zwischen zu registrierendem Rauchmelder 2 und Server 3 Daten ausgetauscht werden können. Das mobile Gerät 4 ist derart mit dem Server 3 verbunden, dass Daten zwischen dem mobilen Gerät 4 und dem Server 3 ausgetauscht werden können. Bevorzugt sind Rauchmelder 2 und Server 3 sowie mobiles Gerät 4 und Server 3 drahtlos, bspw. über ein Mobilfunknetz, besonders bevorzugt über Narrowband-Internet of Things (Narrowband IoT) verbunden. Der zu registrierende Rauchmelder 2 übermittelt erste Identifikationsdaten 6 an den Server 3. Die Verbindung des Rauchmelders 2 mit dem Server 3 und das Initiieren der Übertragung der ersten Identifikationsdaten 6 kann dabei bspw. von einem Benutzer durch ein Betätigungselement des Rauchmelders, z.B. einen Taster oder einen Betätigungsknopf, erfolgen. Der Benutzer kann sich über eine auf dem mobilen Gerät 4 gespeicherte App oder GUI in sein auf dem Server 3 hinterlegtes Benutzerprofil 11 einloggen und über das GUI dem Server 3 mitteilen, dass ein Rauchmelder 2 zu seinem Benutzerprofil 11 hinzugefügt werden soll. Anschließend werden zweite Identifikationsdaten 7 von dem Rauchmelder 2 an das mobile Gerät 4 übermittelt. Die Übermittlung der zweiten Identifikationsdaten 7 kann dabei z.B. durch Scannen eines auf dem Rauchmelder 2 angebrachten QR-Codes durch das mobile Gerät 4 erfolgen. Das mobile Gerät 4 kann danach die von dem Rauchmelder 2 empfangenen zweiten Identifikationsdaten 7 und die das Benutzerprofil 11 eindeutig identifizierenden Benutzeridentifikationsdaten 5 an den Server 3 übermitteln. Der Server 3 kann daraufhin den zu registrierenden Rauchmelder 2 identifizieren, bspw. anhand eines Vergleichs der ersten und der zweiten Identifikationsdaten und anhand der Benutzeridentifikationsdaten 5 den Rauchmelder 2 dem Benutzerprofil 11 zuordnen. Der nun zugeordnete Rauchmelder 2 kann nun z.B. im GUI angezeigt werden und ggf. von dem Benutzer weiter konfiguriert werden. Beispielsweise können dem Rauchmelder 2 nun Adressdaten 17 zugeordnet werden, z.B. eine Straßenadresse oder eine Raumnummer. Die Adressdaten 17 können bereits vor dem Zuordnen des Rauchmelders 2 zu dem Benutzerprofil 11 auf dem Server 3 hinterlegt worden sein, z.B. auch vor dem Herstellen der Datenverbindung zwischen Rauchmelder 2 und Server 3. Die Adressdaten 17 können aber auch mit Zuordnen der Adressdaten 17 zu dem Rauchmelder 2 auf dem Server 3 hinterlegt werden.

Es kann vorgesehen sein, dass der Rauchmelder 2 nach seiner Zuordnung oder in periodischen Zeitabständen überprüft, ob seine aufgespielte Firmware derjenigen der auf dem Server 3 vorgehaltenen Version entspricht. Bei Abweichungen kann die Firmware des Rauchmelders automatisch aktualisiert werden, bspw. durch herunterladen der auf dem Server 3 vorgehaltenen aktuellen Version. Gleichermaßen kann der Rauchmelder 2 nach seiner Zuordnung oder in periodischen Zeitabständen überprüfen, ob seine Einstellungen oder Parameter denjenigen des Servers 3 entsprechen. Sind die Einstellungen oder Parameter bspw. durch den Benutzer über das GUI serverseitig geändert worden, kann der Rauchmelder 2 diese aktualisieren bzw. synchronisieren. Es kann auch vorgesehen sein, dass anstelle oder zusätzlich zu dem "pull" durch den Rauchmelder 2 der Server 3 oder der Benutzer eine Aktualisierung bspw. der Firmware oder der Parameter "pusht", d. h. serverseitig initiiert.

Nach seiner Zuordnung kann der Rauchmelder 2 in periodischen Zeitabständen Zustandsdaten bzw. Statusdaten und/oder Betriebsdaten bzw. Messdaten an den Server 3 kommunizieren. Es kann auch vorgesehen sein, zusammen mit den Status- und/oder den Messdaten die ersten und/oder zweiten Identifikationsdaten zu übermitteln, um so eine einfache Zuordnung der von dem Server 3 empfangenen Daten zu den jeweiligen Benutzerprofilen 11 zu ermöglichen. Die empfangenen Daten können serverseitig ausgewertet werden, beispielsweise um einen Alarmfall und/oder einen Wartungsfall zu identifizieren.

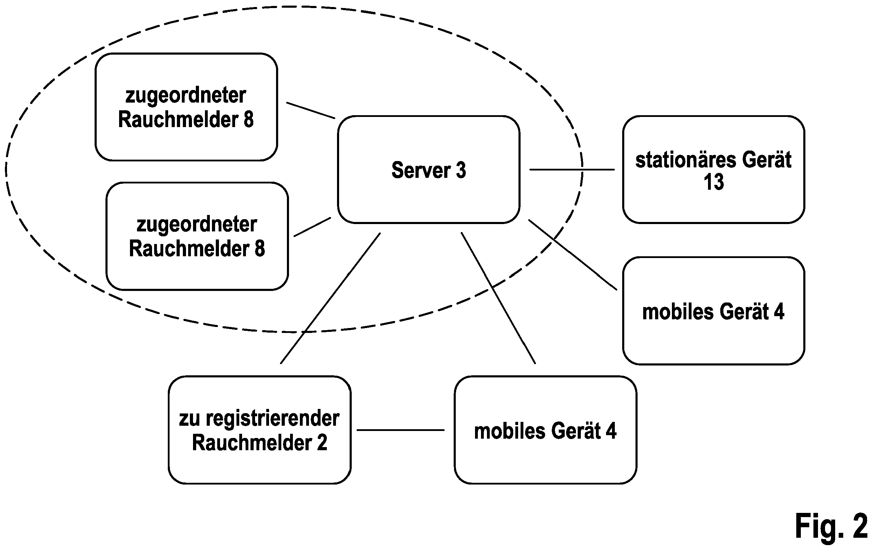

Figur 2 zeigt ein Rauchmelderverwaltungssystem 1 mit mindestens einem Server 3 und mindestens einem zugeordneten Rauchmelder 8. Rauchmelder 8 kann mit dem Server 3 Daten austauschen. Bspw. kann der Rauchmelder 8 an den Server 3 Messdaten oder Zustandsdaten übermitteln. Der Server 3 kann an den Rauchmelder 8 z.B. Firmware-Updates senden. Der Server 3 ist bevorzugt cloud-basiert. Rauchmelder 8 und Server 3 sind über Narrowband-Internet of Things (Narrowband IoT), verbunden. Der Rauchmelder kann dazu ein geeignetes Modul, bspw. eine SIM-Karte, aufweisen. Dadurch kann der Rauchmelder flexibel positioniert werden, da auf das Verlegen von Kabeln verzichtet werden kann. Besonders bevorzugt ist der Rauchmelder 8 direkt mit dem Server 3 verbunden. Damit kann auf ein zwischen Rauchmelder 8 und Server 3 zwischengeschaltetes Gateway verzichtet werden, wodurch weiterhin die Montage sowie der Austausch bzw. die Wartung der Rauchmelder 8 erleichtert wird. In einer Ausrührungsform kann aber auch mindestens einer der Rauchmelder 8 kabelgebunden mit dem Server 3 verbunden sein. Weiterhin ist in Figur 2 ein zu registrierender Rauchmelder 2 und ein zur Registrierung verwendetes mobiles Gerät 4 gezeigt, die zur Durchführung des oben beschriebenen Registrierungsverfahrens beide mit dem Server 3 zum Datenaustausch verbunden sind. Wie in Figur 2 gezeigt, ist ein weiteres mobiles Gerät 4 mit dem Server 3 verbunden. Über das mobile Gerät 4 kann ein Benutzer auf sein auf dem Server 3 hinterlegtes Benutzerprofil 11 zugreifen und bspw. die auf dem Server 4 hinterlegten Daten des dem Benutzerprofil 11 zugeordneten Rauchmelders 8 abrufen. Zu dem gleichen Zweck kann auch ein stationäres Gerät 13 verwendet werden, d.h. der Benutzer kann auch über das stationäre Gerät 13 auf den Server 3 bzw. sein Benutzerprofil 11 zugreifen. Das mobile Gerät 4 kann z.B. ein Smartphone, ein PDA, ein Tablet oder ein Laptop sein. Das stationäre Gerät 13 kann z.B. ein Desktop-PC, eine Workstation oder dergleichen sein.

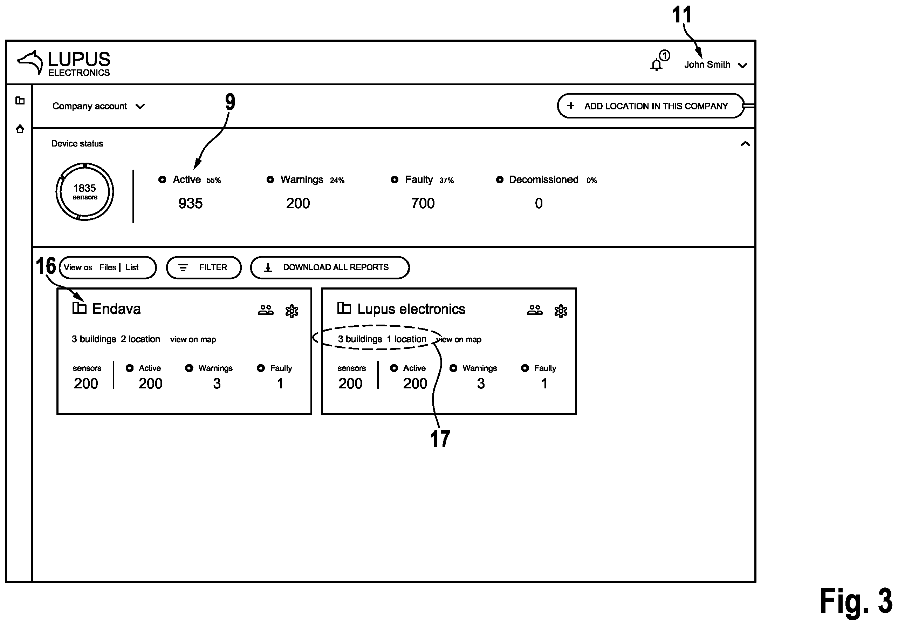

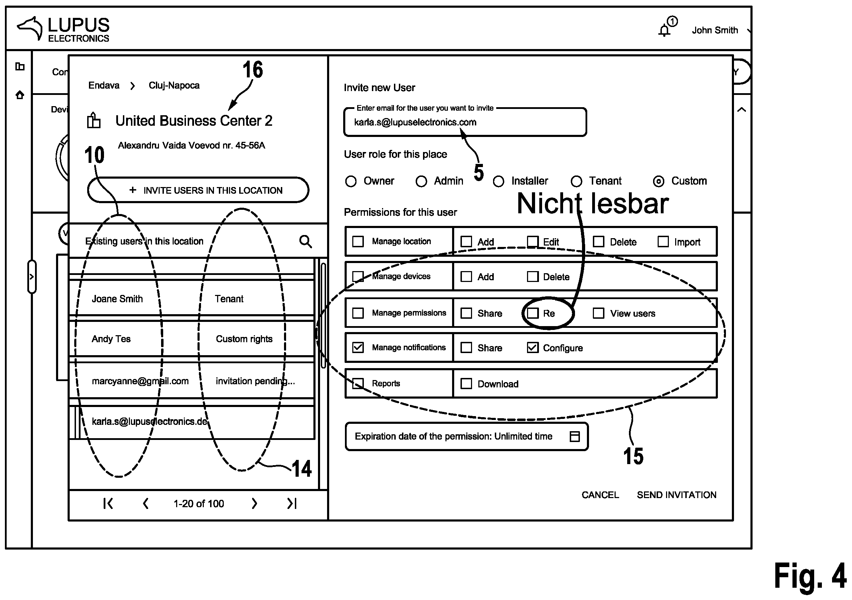

Bevorzugt kann der Benutzer auf sein Benutzerprofil 11 über ein Computergerät, beispielsweise das mobile Gerät 4 und/oder das stationäre Gerät 13, mittels eines Computerprogramms, einer App oder einem GUI zugreifen. Figuren 3 bis 6 zeigen beispielhaft ein dazu geeignetes GUI. Über das GUI kann der Benutzer Rauchmelder hinzufügen, entfernen und/oder verwalten, sowie übermittelte Daten des Rauchmelders einsehen. Figur 3 zeigt bspw. eine Übersicht der einem Benutzerprofil 11 zugeordneten Rauchmelder 8. Direkt auf einen Blick erkennbar sind die Zustandsdaten 9 der dem Benutzerprofil 11 zugeordneten Rauchmelder 8. Wie in Figur 3 gezeigt können die jeweiligen Rauchmelder 8 in beliebige Rauchmeldergruppen 16 eingeteilt werden, um bspw. die Verwaltung zu erleichtern. Die jeweiligen Rauchmeldergruppen 16 können weiterhin in beliebige Rauchmelderuntergruppen 17 eingeteilt werden. Damit kann sich eine beliebige Gruppenhierarchie der zugeordneten Rauchmelder 8 ergeben. Durch eine geeignete Gruppenhierarchie kann die Verwaltung der Rauchmelder 8 damit deutlich erleichtert werden. Es müssen nicht alle Rauchmelder 8 in Rauchmeldergruppen 16 eingeteilt werden; bei dem in Figur 3 gezeigten Beispiel sind von 1835 Rauchmeldern z.B. 404 Rauchmelder in eine erste Rauchmeldergruppe 16 ("Endava") mit drei Rauchmelderuntergruppen 17 ("3 buildings") und weitere 404 Rauchmelder in eine zweite Rauchmeldergruppe ("Lupus Electronics‴) mit ebenfalls 3 Rauchmelderuntergruppen ("3 buildings") eingeteilt. Den Rauchmeldern 8, den Rauchmeldergruppen 16 und/oder Rauchmelderuntergruppen 17 können dabei weitere Attribute zugeordnet werden, bspw. ein Beschreibungstext oder Positions- und/oder Adressdaten.. In der in den Figuren gezeigten beispielhaften Ausführungsform sind die Rauchmelderuntergruppen 17 durch die Adressdaten 17 der Rauchmelder bestimmt. Eine Rauchmelderuntergruppe 17 umfasst in dem gezeigten Ausführungsbeispiel damit sämtliche in demselben Gebäude installierten Rauchmelder 8. Selbstverständlich können die Rauchmelder 8 auch in mehr oder weniger Rauchmeldergruppen oder Rauchmelderuntergruppen eingeteilt sein oder werden; beispielsweise könnten alle auf einer Etage eines Gebäudes installierten Rauchmelder 8 in eine weitere Untergruppe eingeteilt sein oder werden. Durch eine derartige Einteilung lassen sich die Rauchmelder bequem und flexibel in sinnvolle Gruppen unterteilen. Eine Einteilung der Rauchmelder in weniger Rauchmeldergruppen oder Rauchmelderuntergruppen kann aber auch zusätzlich oder stattdessen anhand anderer Kriterien erfolgen. es kann vorgesehen sein, die Rauchmelder z.B. auch ausschließlich oder zusätzlich nach beispielsweise der Typenbezeichnung oder nach Hersteller zu gruppieren, um beispielsweise die Verwaltung zu erleichtern oder z.B. im Falle von Wartungsnachrichten diese an ausschließlich auf den jeweiligen Hersteller oder Rauchmeldertyp spezialisierten Unternehmen zukommen zu lassen. Es kann vorteilhaft sein, die von dem Rauchmelder 8 übermittelten Daten auch weiteren Benutzern bzw. weiteren Benutzerprofilen 11 zur Verfügung zu stellen. Dazu kann mindestens ein oder jeder Rauchmelder8, Rauchmeldergruppe 16 und/oder Rauchmelderuntergruppe 17 einer Benutzerprofilgruppe 10 zugeordnet sein oder einer solchen entsprechen. Die jeweilige Benutzerprofilgruppe 10 entspricht dabei der Gruppe derjenigen Benutzerprofile 11, die auf einige oder alle Daten der der jeweiligen Rauchmelder 8 und/oder der Rauchmeldergruppe 16 und/oder der Rauchmelderuntergruppe 17 zugeordneten Rauchmelder 8 zugreifen können. Wie in Figur 4 gezeigt kann ein Gruppenadministrator Benutzerprofile 11 der Benutzerprofilgruppe 10 hinzufügen oder entfernen. Das Hinzufügen kann besonders einfach mittels der einem Benutzerprofil 11 entsprechenden Benutzeridentifikationsdaten 5 erfolgen. Der Administrator kann jedem Benutzerprofil 11 der Benutzerprofilgruppe 10 individuell Zugriffsrechte 15 gewähren oder entziehen. Damit kann durch den Administrator gesteuert werden, welches Benutzerprofil 11 auf welche Daten welches Rauchmelders 8 zugreifen kann und/oder welche Benachrichtigungen an das jeweilige Benutzerprofil 11 gesendet werden. Wie in Figur 4 gezeigt können die Benutzerprofile 11 der Benutzerprofilgruppe 10 auch in verschiedene Untergruppen 14 eingeteilt werden; im Beispiel der Figur 4 in die Rollen "Owner", "Admin", "Installer", "Tenant" oder "Custom". Jede Rolle kann dabei unterschiedliche Rechte haben; die jeweiligen Rollen "Owner"; "Admin", "Installer", "Tenant" können dabei Templates sein bzw. deren Rechte vordefiniert sein, so dass eine schnelle und komfortable Rechteverwaltung durch den Administrator ermöglicht wird. So kann z.B. vorgesehen sein, dass ein Benutzerprofil 11 mit Rolle "Tenant" lediglich Benachrichtigungen z.B. im Falle eines Alarms empfängt, während ein anderes Benutzerprofil 11 mit Rolle "Installer" auch die Betriebsparameter des Rauchmelders 8 ändern darf. Ist nichts anderes vorgesehen, so kann dasjenige Benutzerprofil 11 Administrator sein, das der Rauchmeldergruppe 16 den ersten Rauchmelder 8 mittels des erfindungsgemäßen Verfahrens hinzugefügt hat.

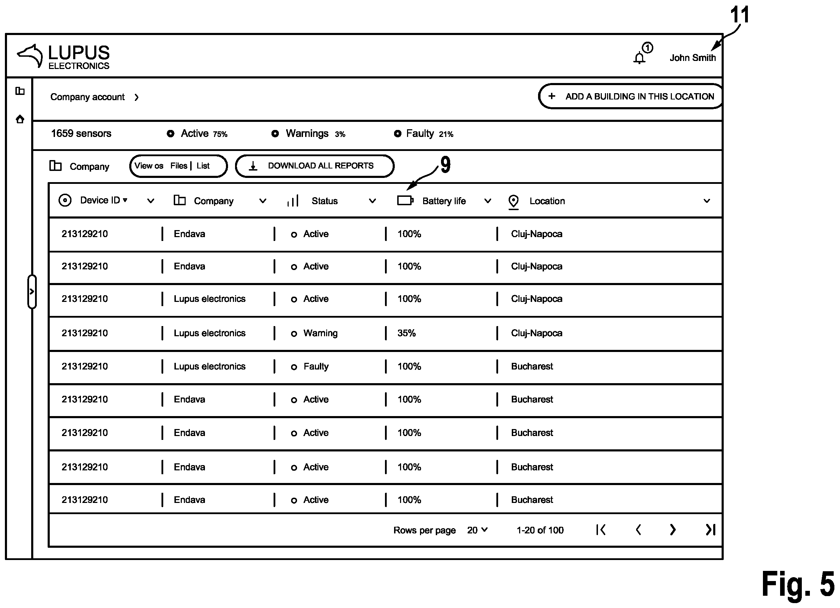

Figur 5 zeigt eine weitere beispielhafte Übersicht der einer Rauchmeldergruppe 16 zugeordneten Rauchmelder. Damit kann das Benutzerprofil 11 beispielsweise den Batteriezustand der jeweiligen Rauchmelder oder deren Status einsehen.

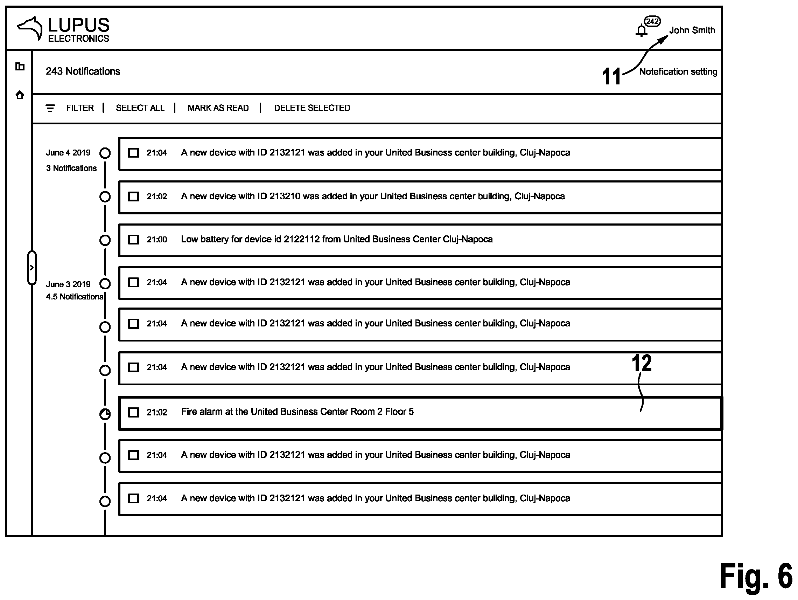

Figur 6 zeigt beispielhaft an ein Benutzerprofil 11 übermittelten Benachrichtigungen. Im Alarmfall kann eine Alarmnachricht 12 an die dem den Alarm meldenden Rauchmelder 8 zugeordneten Benutzerprofile 11 bzw. die mit den jeweiligen Rechten ausgestatteten Benutzerprofile 11 der zugeordneten Benutzerprofilgruppe 10 gesendet werden. Benachrichtigungen können aber auch wie in Figur 6 gezeigt z.B. Installations- oder Wartungsereignisse oder Warnungen bezüglich Änderung des Rauchmelderzustands, bspw. Sensorausfalls oder bzgl. Batterielebensdauer, sein. Es kann vorgesehen sein, die Benachrichtigungen an dem jeweiligen Benutzerprofil 11 zugeordnete Computergeräte, beispielsweise mobile Geräte 4 und/oder stationäre Geräte 13, E-Mail-Adressen, Telefonnummern oder dergleichen zu senden.

## Patentansprüche

1. Verfahren zur Zuordnung eines zu registrierenden Rauchmelders (2) zu einem Benutzerprofil (11) eines Rauchmelderverwaltungssystems (1), mit den folgenden Schritten:
- Herstellen einer Datenverbindung zwischen dem Rauchmelder (2) und einem Server (3) des Rauchmelderverwaltungssystems (1), wobei der Rauchmelder (2) direkt mit dem Server (3) über Narrowband-Internet of Things verbunden wird, und Übertragen von ersten Identifikationsdaten (6) des zu registrierenden Rauchmelders (2) an den Server (3) über die Datenverbindung zwischen Rauchmelder (2) und Server (3), wobei die ersten Identifikationsdaten (6) einen dem Rauchmelder (2) eindeutig zugeordneten alphanumerischen Code aufweisen;
- Herstellen einer Datenverbindung zwischen einem mobilen Gerät (4) und dem Server (3);
- Einloggen in das Benutzerprofil (11) mittels des mobilen Geräts (4) unter Verwendung von dem Benutzerprofil (11) eindeutig zugeordneten Benutzeridentifikationsdaten (5);
- Übertragen von zweiten Identifikationsdaten (7) des zu registrierenden Rauchmelders (2) von dem zu registrierenden Rauchmelder (2) an das mobile Gerät (4);
- Übertragen der zweiten Identifikationsdaten (7) an den Server (3) durch das mobile Gerät (4), oder Übertragen der zweiten Identifikationsdaten (7) und der Benutzeridentifikationsdaten (5) an den Server (3) durch das mobile Gerät (4); und
- Identifizieren des Rauchmelders (2) mittels der ersten und zweiten Identifikationsdaten (6; 7) und Zuordnen des Rauchmelders (2) zu dem eingeloggten Benutzerprofil (11) oder dem den Benutzeridentifikationsdaten (5) entsprechenden Benutzerprofil (11).

2. Verfahren nach Anspruch 1, wobei nach dem Identifizieren des Rauchmelders (2) und dem Zuordnen des Rauchmelders (2) zu dem Benutzerprofil (11) dem dem Benutzerprofil (11) zugeordneten Rauchmelder (2) Positions- und/oder Adressdaten (17) zugeordnet werden.

3. Verfahren nach einem der Ansprüche 1 oder 2, bei dem die ersten und die zweiten Identifikationsdaten (6; 7) identisch sind.

4. Verfahren nach einem der vorangegangenen Ansprüche, bei dem das mobile Gerät (4) mindestens für das Übertragen der jeweiligen Daten (5; 6; 7) mit dem Server (3) drahtlos, bevorzugt über ein Mobilfunknetz, besonders bevorzugt über Narrowband-Internet of Things, verbunden ist.

5. Verfahren nach einem der vorangegangenen Ansprüche, bei dem das Übertragen der zweiten Identifikationsdaten (7) an das mobile Gerät (4) entweder
- das Erfassen eines auf dem Rauchmelder (2) angebrachten QR-codes mit dem mobilen Gerät (4), oder
- das Erfassen eines auf dem Rauchmelder (2) angebrachten oder dem Rauchmelder beigelegten Piktogramms oder alphanumerischen Codes mit dem mobilen Gerät (4) und das Anwenden einer Bilderkennungssoftware aufweist, oder
- über eine drahtlose Verbindung zwischen Rauchmelder (2) und mobilem Gerät (4) erfolgt.

6. Verfahren nach einem der vorangegangenen Ansprüche, bei dem vor dem Zuordnen des Rauchmelders (2) von dem Server (3) eine Autorisierungsanfrage an das mobile Gerät (4) gesendet wird.

7. Verfahren nach einem der vorangegangenen Ansprüche, bei dem nach dem Zuordnen des Rauchmelders (2) zu einem Benutzerprofil der Rauchmelder (2, 8) mindestens einem weiteren Benutzerprofil (11) zugeordnet wird, wobei diese weitere Zuordnung entweder
- analog zu dem in einem der Ansprüche 1-6 beschriebenen Verfahren oder
- über eine Änderung der auf dem Server (3) hinterlegten Zuordnungsdaten erfolgt.

8. Verfahren nach einem der vorangegangenen Ansprüche, bei dem der Rauchmelder (2, 8) nach der Zuordnung periodisch Zustandsdaten (9) und/oder Betriebsdaten und/oder die ersten Identifikationsdaten (6) und/oder die zweiten Identifikationsdaten (7) an den Server (3) übermittelt.

9. Verfahren nach einem der vorangegangenen Ansprüche, bei dem nach dem Zuordnen der Rauchmelder (2, 8) einmalig oder periodisch Betriebsparameter, Einstellungen und/oder Firmware mit dem Server (3) abgleicht und/oder mit diesem synchronisiert.

10. Rauchmelderverwaltungssystem (1), aufweisend mindestens einen Rauchmelder (8) und mindestens einen Server (3), wobei auf dem Server (3) mindestens ein Benutzerprofil (11) hinterlegt ist, wobei der Server (3) mit dem mindestens einen Rauchmelder (8) zum Datenaustausch verbunden ist, wobei der Server (3) bevorzugt cloud-basiert ist, wobei der Server (3) dazu eingerichtet ist, von dem Rauchmelder (8) empfangene Daten abzulegen und einem dem Rauchmelder (8) zugeordneten Benutzerprofil (11) zugänglich zu machen, wobei der Server (3) eine Kommunikationsschnittstelle aufweist, die dazu eingerichtet ist, eine direkte Datenverbindung über Narrowband-Internet of Things mit einem zu registrierenden Rauchmelder (2) und eine Datenverbindung mit einem mobilen Gerät (4) herzustellen, wobei der Server (3) dazu eingerichtet ist, erste Identifikationsdaten (6), die einen den zu registrierenden Rauchmelder (2) eindeutig zugeordneten alphanumerischen Code aufweisen, von dem zu registrierenden Rauchmelder (2) über die Kommunikationsschnittstelle zu empfangen, und wobei der Server (3) dazu eingerichtet ist, zweite Identifikationsdaten (7) von dem mobilen Gerät (4) über die Kommunikationsschnittstelle zu empfangen oder zweite Identifikationsdaten (7) und Benutzeridentifikationsdaten (5) von dem mobilen Gerät(4) über die Kommunikationsschnittstelle zu empfangen, so dass der zu registrierender Rauchmelder (2) mittels von dem mobilen Gerät (4) empfangenen zweiten Identifikationsdaten (7) und von dem zu registrierenden Rauchmelder (2) empfangenen ersten Identifikationsdaten (6) dem Benutzerprofil (11) zuordbar ist, wobei der Rauchmelder (8) dem Benutzerprofil (11) entsprechend dem Verfahren nach einem der Ansprüche 1 bis 10 zugeordnet ist.

11. Rauchmelderverwaltungssystem (1) nach Anspruch 10, bei dem das mobile Gerät (4) mit dem Server (3) drahtlos, bevorzugt über ein Mobilfunknetz und besonders bevorzugt über Narrowband-Internet of Things verbunden ist.

12. Rauchmelderverwaltungssystem (1) nach einem der Ansprüche 10 bis 11, wobei der Server (3) mit mindestens einem Computergerät (4,13) zum Datenaustausch verbunden ist, wobei das Computergerät (4, 13) dazu eingerichtet ist, unter Verwendung von das Benutzerprofil (11) eindeutig identifizierenden Benutzeridentifikationsdaten (5) die von dem entsprechenden Rauchmelder (8) empfangenen und auf dem Server (3) hinterlegten Daten herunterzuladen, zu manipulieren oder dem Benutzerprofil (11) neue Daten hinzuzufügen.

13. Rauchmelderverwaltungssystem (1) nach einem der Ansprüche 10 bis 12, wobei auf dem Server (3) eine Mehrzahl Benutzerprofile (11) hinterlegt ist, wobei mindestens eines, bevorzugt jedes der Benutzerprofile (11) mindestens einer von mindestens zwei Benutzerprofilgruppen (10) zugeordnet ist, wobei jedem derselben Benutzerprofilgruppe (10) zugeordneten Benutzerprofil (11) derselbe der mindestens einen Rauchmelder (8) zugeordnet ist.

14. Rauchmelderverwaltungssystem (1) nach Anspruch 13, wobei mindestens eines der einer Benutzerprofilgruppe (10) zugeordneten Benutzerprofile (11) Administratorrechte mindestens bezüglich der jeweiligen Benutzerprofilgruppe (10) hat.

15. Rauchmelderverwaltungssystem (1) nach einem der Ansprüche 10 bis 14, wobei das Rauchmelderverwaltungssystem (1) eine Auswerteeinheit aufweist, die aus den von dem Rauchmelder (8) empfangenen Daten einen Alarmfall und/oder Wartungsfall identifizieren kann, wobei im Alarmfall das System eine Alarmnachricht (12) und/oder im Wartungsfall eine Wartungsnachricht an die dem Rauchmelder zugeordneten Benutzerprofile (11) sendet.

## Claims

1. A method for assigning a smoke detector (2) to be registered to a user profile (11) of a smoke detector management system (1), comprising the following steps:
- Establishing a data connection between the smoke detector (2) and a server (3) of the smoke detector management system (1), the smoke detector (2) being connected directly to the server (3) via narrowband Internet of Things, and transmitting first identification data (6) of the smoke detector (2) to be registered to the server (3) via the data connection between the smoke detector (2) and the server (3), the first identification data (6) having an alphanumeric code uniquely assigned to the smoke detector (2);
- Establishing a data connection between a mobile device (4) and the server (3);
- Logging into the user profile (11) by means of the mobile device (4) using user identification data (5) uniquely assigned to the user profile (11);
- Transmitting second identification data (7) of the smoke detector (2) to be registered from the smoke detector (2) to be registered to the mobile device (4);
- Transmitting the second identification data (7) to the server (3) by the mobile device (4), or transmitting the second identification data (7) and the user identification data (5) to the server (3) by the mobile device (4); and
- Identifying the smoke detector (2) by means of the first and second identification data (6; 7) and assigning the smoke detector (2) to the logged-in user profile (11) or the user profile (11) corresponding to the user identification data (5).

2. The method according to claim 1, wherein after identifying the smoke detector (2) and assigning the smoke detector (2) to the user profile (11), position and/or address data (17) are assigned to the smoke detector (2) assigned to the user profile (11).

3. The method according to one of claims 1 or 2, in which the first and the second identification data (6; 7) are identical.

4. The method according to any one of the preceding claims, in which the mobile device (4) is connected to the server (3) wirelessly, preferably via a mobile radio network, particularly preferably via narrowband Internet of Things, at least for the transmission of the respective data (5; 6; 7).

5. The method according to any one of the preceding claims, in which said transmitting of the second identification data (7) to the mobile device (4) either
- comprises capturing a QR-code attached to the smoke detector (2) with the mobile device (4), or
- comprises capturing a pictogram or alphanumeric code attached to or included with the smoke detector (2) with the mobile device (4) and applying image recognition software, or
- is conducted via a wireless connection between smoke detector (2) and mobile device (4).

6. The method according to any one of the preceding claims, wherein an authorization request is sent from the server (3) to the mobile device (4) before associating the smoke detector (2).

7. The method according to any one of the preceding claims, in which, after the smoke detector (2) has been assigned to a user profile, the smoke detector (2, 8) is assigned to at least one further user profile (11), this further assignment being either
- analogous to the method described in any one of claims 1 - 6, or
- conducted via a change in the assignment data stored on the server (3).

8. The method according to any one of the preceding claims, in which the smoke detector (2, 8) periodically transmits status data (9) and/or operating data and/or the first identification data (6) and/or the second identification data (7) to the server (3) after the assignment.

9. The method according to any one of the preceding claims, in which, after the smoke detector (2, 8) has been assigned, it matches and/or synchronizes operating parameters, settings and/or firmware with the server (3) once or periodically.

10. A smoke detector management system (1), comprising at least one smoke detector (8) and at least one server (3), wherein at least one user profile (11) is stored on the server (3), wherein the server (3) is connected to the at least one smoke detector (8) for data exchange, wherein the server (3) is preferably cloud-based, wherein the server (3) is configured to store data received from the smoke detector (8) and make it accessible to a user profile (11) assigned to the smoke detector (8), the server (3) having a communication interface which is set up to establish a direct data connection via narrowband Internet of Things with a smoke detector (2) to be registered and a data connection with a mobile device (4), the server (3) being set up to store first identification data (6), which have an alphanumeric code uniquely assigned to the smoke detector (2) to be registered, from the smoke detector (2) to be registered via the communication interface, and the server (3) being set up to receive second identification data (7) from the mobile device (4) via the communication interface or to receive second identification data (7) and user identification data (5) from the mobile device (4) via the communication interface, so that the smoke detector (2) to be registered can be assigned to the user profile (11) by means of second identification data (7) received from the mobile device (4) and first identification data (6) received from the smoke detector (2) to be registered, the smoke detector (8) being assigned to the user profile (11) in accordance with the method according to one of claims 1 to 10.

11. The smoke detector management system (1) according to claim 10, wherein the mobile device (4) is connected to the server (3) wirelessly, preferably via a mobile network and particularly preferably via narrowband Internet of Things.

12. The smoke detector management system (1) according to any one of claims 10 to 11, wherein the server (3) is connected to at least one computer device (4, 13) for data exchange, wherein the computer device (4, 13) is set up to download, manipulate or add new data to the user profile (11) received from the corresponding smoke detector (8) and stored on the server (3) using user identification data (5) uniquely identifying the user profile (11).

13. The smoke detector management system (1) according to one of claims 10 to 12, wherein a plurality of user profiles (11) is stored on the server (3), wherein at least one, preferably each of the user profiles (11) is assigned to at least one of at least two user profile groups (10), wherein each user profile (11) assigned to the same user profile group (10) is assigned to the same one of the at least one smoke detectors (8).

14. The smoke detector management system (1) according to claim 13, wherein at least one of the user profiles (11) assigned to a user profile group (10) has administrator rights at least with respect to the respective user profile group (10).

15. The smoke detector management system (1) according to any one of claims 10 to 14, wherein the smoke detector management system (1) has an evaluation unit which can identify an alarm case and/or maintenance case from the data received from the smoke detector (8), wherein in the alarm case the system sends an alarm message (12) and/or in the maintenance case it sends a maintenance message to the user profiles (11) assigned to the smoke detector.

## Revendications

1. Procédé pour l'attribution d'un détecteur de fumée à enregistrer (2) à un profil d'utilisateur (11) d'un système de gestion de détecteurs de fumée (1), avec les étapes suivantes :
- établissement d'une liaison de données entre le détecteur de fumée (2) et un serveur (3) du système de gestion de détecteurs de fumée (1), dans lequel le détecteur de fumée (2) est relié directement avec le serveur (3) par l'intermédiaire d'un internet d'objets à bande étroite et transmission de premières données d'identification (6) du détecteur de fumée à enregistrer (2) au serveur (3) par l'intermédiaire de la liaison de données entre le détecteur de fumée (2) et le serveur (3), dans lequel les premières données d'identification (6) comprennent un code alphanumérique attribué de manière unique au détecteur de fumée (2) ;
- établissement d'une liaison de données entre un appareil mobile (4) et le serveur (3) ;
- connexion au profil d'utilisateur (11) au moyen de l'appareil mobile (4) à l'aide des données d'identification (5) attribuées de manière unique au profil d'utilisateur (11) ;
- transmission de deuxièmes données d'identification (7) du détecteur de fumée à enregistrer (2), du détecteur de fumée à enregistrer (2) à l'appareil mobile (4) ;
- transmission des deuxièmes données d'identification (7) au serveur (3) par l'intermédiaire de l'appareil mobile (4) ou transmission des deuxièmes données d'identification (7) et des données d'identification d'utilisateur (5) au serveur (3) par l'intermédiaire de l'appareil mobile (4) ; et
- identification du détecteur de fumée (2) au moyen des premières et deuxièmes données d'identification (6 ; 7) et attribution du détecteur de fumée (2) au profil d'utilisateur (11) connecté ou au profil d'utilisateur (11) correspondant aux données d'identification d'utilisateur (5).

2. Procédé selon la revendication 1, dans lequel, après l'identification du détecteur de fumée (2) et l'attribution du détecteur de fumée (2) au profil d'utilisateur (11), des données de position et/ou d'adresse (17) sont attribuées au détecteur de fumée (2) attribué au profil d'utilisateur (11).

3. Procédé selon l'une des revendications 1 ou 2, dans lequel les premières et deuxièmes données d'identification (6 ; 7) sont identiques.

4. Procédé selon l'une des revendications précédentes, dans lequel l'appareil mobile (4) est relié, au moins pour la transmission des données (5 ; 6 ; 7) correspondante, de manière sans fil avec le serveur (3), de préférence par l'intermédiaire d'un réseau de téléphonie mobile, plus particulièrement par l'intermédiaire d'un internet d'objets à bande étroite.

5. Procédé selon l'une des revendications précédentes, dans lequel la transmission des deuxièmes données d'identification (7) à l'appareil mobile (4)
- comprend la détection d'un code QR apposé sur le détecteur de fumée (2), avec l'appareil mobile (4) ou
- la détection d'un pictogramme ou d'un code alphanumérique apposé sur le détecteur de fumée (2) ou joint au détecteur de fumée, avec l'appareil mobile (4) et l'exécution d'un logiciel de reconnaissance d'image ou
- a lieu par l'intermédiaire d'une liaison sans fil entre le détecteur de fumée (2) et l'appareil mobile (4).

6. Procédé selon l'une des revendications précédentes, dans lequel, avant l'attribution du détecteur de fumée (2) par le serveur (3), une demande d'autorisation est envoyée à l'appareil mobile (4).

7. Procédé selon l'une des revendications précédentes, dans lequel, après l'attribution du détecteur de fumée (2) à un profil d'utilisateur, le détecteur de fumée (2, 8) est attribué à au moins un autre profil d'utilisateur (11), cette autre attribution ayant lieu
- de manière analogue u procédé décrit dans une des revendications 1 à 6 ou
- par l'intermédiaire des données d'attribution enregistrées sur le serveur (3).

8. Procédé selon l'une des revendications précédentes, dans lequel le détecteur de fumée (2, 8) transmet périodiquement, après l'attribution, des données d'état (9) et/ou des données de fonctionnement et/ou les premières données d'identification (6) et/ou les deuxièmes données d'identification (7) au serveur (3).

9. Procédé selon l'une des revendications précédentes, dans lequel, après l'attribution, le détecteur de fumée (2, 8) compare une fois ou périodiquement les paramètres de fonctionnement, les réglages et/ou le firmware avec le serveur (3) et/ou les synchronise avec celui-ci.

10. Système de gestion de détecteurs de fumée (1), comprenant au moins un détecteur de fumée (8) et au moins un serveur (3), dans lequel, sur le serveur (3), est enregistré au moins un profil d'utilisateur (11), dans lequel le serveur (3) est relié avec l'au moins un détecteur de fumée (8) pour l'échange de données, dans lequel le serveur (3) est de préférence basé sur un cloud, dans lequel le serveur (3) est conçu pour enregistrer les données reçues en provenance du détecteur de fumée (8) et pour donner accès à un profil d'utilisateur (11) attribué au détecteur de fumée (8), dans lequel le serveur (3) comprend une interface de communication qui est conçue pour établir une liaison de données directe par internet d'objets à bande étroite avec un détecteur de fumée à enregistrer (2) et une liaison de données avec un appareil mobile (4), dans lequel le serveur (3) est conçu pour recevoir des premières données d'identification (6), qui comprennent un code alphanumérique attribué de manière unique au détecteur de fumée à enregistrer (2), en provenance du détecteur de fumée à enregistrer (2) par l'intermédiaire de l'interface de communication et dans lequel le serveur (3) est conçu pour recevoir des deuxièmes données d'identification (7) en provenance de l'appareil mobile (4) par l'intermédiaire de l'interface de communication ou pour recevoir des deuxièmes données d'identification (7) et des données d'identification d'utilisateur (5) en provenance de l'appareil mobile (4) par l'intermédiaire de l'interface de communication, de façon à ce que le détecteur de fumée à enregistrer (2) puisse être attribué au profil d'utilisateur (11) au moyen des deuxièmes données d'identification (7) reçues de l'appareil mobile (4) et des premières données d'identification (6) reçues du détecteur de fumée à enregistrer (2), dans lequel le détecteur de fumée (8) est attribué au profil d'utilisateur (11) selon le procédé selon l'une des revendications 1 à 10.

11. Système de gestion de détecteurs de fumée (1) selon la revendication 10, dans lequel l'appareil mobile (4) est relié sans fil avec le serveur (3), de préférence par l'intermédiaire d'un réseau de téléphonie mobile et plus particulièrement par l'intermédiaire d'un internet d'objets à bande étroite.

12. Système de gestion de détecteurs de fumée (1) selon l'une des revendications 10 à 11, dans lequel le serveur (3) est relié avec au moins un ordinateur (4, 13) pour l'échange de données, dans lequel l'ordinateur (4, 13) est conçu pour télécharger, à l'aide des données d'identification d'utilisateur (5) identifiant de manière unique le profil d'utilisateur (11), les données reçues du détecteur de fumée (8) correspondant et enregistrées sur le serveur (3), pour les manipuler ou pour ajouter de nouvelles données au profil d'utilisateur (11).

13. Système de gestion de détecteurs de fumée (1) selon l'une des revendications 10 à 12, dans lequel, sur le serveur (3), sont enregistrés une pluralité de profils d'utilisateurs (11), dans lequel au moins un, de préférence chacun des profils d'utilisateurs (11) est attribué à au moins un parmi au moins deux groupes de profils d'utilisateurs (10), dans lequel, à chaque profil d'utilisateur (11) attribué au même groupe de profils d'utilisateurs (10) est attribué le même des au moins un détecteur de fumée (8).

14. Système de gestion de détecteurs de fumée (1) selon la revendication 13, dans lequel un des profils d'utilisateurs (11) attribué à un groupe de profils d'utilisateurs (10) a des droits d'administrateur au moins concernant le groupe de profils d'utilisateurs (10) correspondant.

15. Système de gestion de détecteurs de fumée (1) selon l'une des revendications 10 à 14, dans lequel le système de gestion de détecteurs de fumée (1) comprend une unité d'analyse qui peut identifier, à partir des données reçues du détecteur de fumée (8), un cas d'alarme et/ou un cas de maintenance, dans lequel, dans le cas d'une alarme, le système envoie un message d'alarme (12) et/ou, dans le cas d'une maintenance, un message de maintenance aux profils d'utilisateurs attribués au détecteur de fumée.
